(19) Europäisches Patentamt
European Patent Office
Office européen des brevets

(11) **EP 2 623 163 B1**

(12) **EUROPÄISCHE PATENTSCHRIFT**

(45) Veröffentlichungstag und Bekanntmachung des Hinweises auf die Patenterteilung:
**15.06.2016   Patentblatt 2016/24**

(51) Int Cl.:
*A62C 35/68* $^{(2006.01)}$     *F16L 58/10* $^{(2006.01)}$

(21) Anmeldenummer: **12153964.7**

(22) Anmeldetag: **05.02.2012**

(54) **Feuerlöschsystem**

Fire extinguishing system

Système anti-feu

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**07.08.2013   Patentblatt 2013/32**

(73) Patentinhaber: **Minimax GmbH & Co. KG**
**23840 Bad Oldesloe (DE)**

(72) Erfinder:
• **Rönpagel, Andreas**
**22926 Ahrensburg (DE)**

• **Steinhoff, Michael**
**58313 Herdecke (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
**JP-A- 2010 000 264     US-A1- 2009 194 187**

**Beschreibung**

Die vorliegende Erfindung bezieht sich auf ein Feuerlöschsystem zur Verteilung eines Löschmediums, wobei ein solches Feuerlöschsystem mindestens aufweist:

- Mittel (1) zur Bereitstellung des Löschmediums,

- mindestens ein Mittel (2) zur Applikation des Löschmediums,

- Durchleitungsmittel (3) zur Verbindung der Mittel (1) zur Bereitstellung des Löschmediums mit dem mindestens einen Mittel (2) zur Applikation des Löschmediums.

Die Durchleitungsmittel (3) sind dabei entsprechend dem bekannten Stand der Technik zumindest teilweise als Flussstahl-Metallrohr ausgebildet.

Der Rohrreibungsverlust in Rohren ist dabei gemäß der Hazen-Williams-Formel (1) definiert mit

$$P \; = \; 6{,}05 \cdot 10^5 \cdot L \cdot Q^{1{,}85} \cdot C^{(-1{,}85)} \cdot d^{\,(-4{,}87)}$$

worin:

P = Druckverlust in der Rohrleitung, in bar,

Q = Durchflussrate durch die Rohrleitung, in l/min,

d = mittlere Innendurchmesser des Rohres, in mm,

C = Konstante für Art und Zustand der Rohrleitung,

L = Äquivalentlänge von Rohr- und Formstücken, in m,

Grundsätzlich ist die Berechnung von Druckverlusten in Rohrleitungen auf eine vorgegebene Rohrlänge insbesondere unter Nutzung der Darcy-Weisbach-Gleichung möglich, die zwar allgemeingültig jedoch extrem kompliziert in der Anwendung ist. Aus diesem Grund hat sich die Nutzung der empirischen Hazen-Williams-Formel (1) allgemein und insbesondere für die Auslegung und Berechnung von Sprinkleranlagen durchgesetzt.
Die Erfinder sahen sich anfangs der Aufgabe einer monetären Verbesserung in der *Auslegung* und im *Betrieb* von Sprinkleranlagen ausgesetzt. Insbesondere in den Aufgabenaspekt der monetären Verbesserung im *Betrieb* von Sprinkleranlagen spielt das erkannte Problem hinein, dass bei Sprinkleranlagen nach vielen Monaten nach der Inbetriebnahme mitunter Undichtigkeiten in den Kupplungen als die typischen Verbindungen von als Metallrohre ausgebildeten Durchleitungsmittel (3) auftreten können, was schließlich zu Reparaturleistungen und Versicherungsschäden und damit zu einer signifikanten Verteuerung innerhalb des Betriebs von Sprinkleranlagen führt. Zwar konnte das zuletzt benannte Problem durch verzinkte Metallrohre in Ansätzen behoben werden, eine in allen Belangen überzeugende und vor allen Dingen auch für größere Sprinkleranlagen bezahlbare Lösung steht jedoch trotz zahlreicher Ansätze nach wie vor aus, zumal gerade verzinkte Rohre hinsichtlich betrieblicher Probleme eher kritisch zu beurteilen sind.
Die Erfinder versuchten, bei Ihren Überlegungen auch die mathematischen Abhängigkeiten von Größen in der Hazen-Williams-Formel (1) zu nutzen. In ihr ist insbesondere ein Zusammenhang zwischen dem Druckverlust in der Rohrleitung, P [bar], und der dimensionslosen Konstante C von Interesse. Gemäß den Ausführungen in der deutschen Norm DIN EN 12845, Version 07/2009, gelten dabei die Werte der folgenden Tabelle 1:

Tabelle 1:

| Rohrart | C-Wert |
|---|---|
| Gusseisen | 100 |
| duktiles Gusseisen | 110 |
| Stahl, schwarz - das entspricht Flussstahl im Sinne der vorliegenden Erfindung | 120 |
| verzinkter Stahl | 120 |

(fortgesetzt)

| Rohrart | C-Wert |
|---|---|
| Schleuderbeton | 130 |
| Zementverkleidetes Gusseisen | 130 |
| nicht rostender Stahl - das ist Edelstahl | 140 |
| Kupfer | 140 |
| verstärkte Glasfaser | 140 |

Die Erfinder erkannten schließlich, dass beide Aufgabenaspekte der zugrundeliegenden Aufgabe gelöst werden können mittels eines Feuerlöschsystems zur Verteilung eines Löschmediums, wobei ein solches Feuerlöschsystem mindestens aufweist:

- Mittel (1) zur Bereitstellung des Löschmediums,
- mindestens ein Mittel (2) zur Applikation des Löschmediums,
- Durchleitungsmittel (3) zur Verbindung der Mittel (1) zur Bereitstellung des Löschmediums mit dem mindestens einen Mittel (2) zur Applikation des Löschmediums.

wobei die Durchleitungsmittel (3) zumindest teilweise als Flussstahl-Metallrohr ausgebildet sind,
wobei der Rohrreibungsverlust in Rohren definiert ist gemäß der Hazen-Williams-Formel (1), mit

$$P \ = \ 6{,}05 \cdot 10^5 \cdot L \cdot Q^{1,85} \cdot C^{(-1,85)} \cdot d^{(-4,87)}$$

worin:

P = Druckverlust in der Rohrleitung, in bar,
Q = Durchflussrate durch die Rohrleitung, in l/min,
d = mittlere Innendurchmesser des Rohres, in mm,
C = Konstante für Art und Zustand der Rohrleitung,
L = Äquivalentlänge von Rohr- und Formstücken, in m.

wobei

□ die zumindest teilweise als Flussstahl-Metallrohr ausgebildeten Durchleitungsmittel (3) eine mindestens innenliegende Korrosionsschutzbeschichtung aufweisen,
□ die innenliegende Korrosionsschutzbeschichtung ausgebildet ist zur Gewährleistung eines Wertes für C in einem Bereich von 125 bis 150 bei Inbetriebnahme des Feuerlöschsystems.

Der Wert C bezieht sich dabei auf die als Flussstahl-Metallrohr ausgebildeten Durchleitungsmittel (3), welche die die Erfindung kennzeichnende innenliegende Korrosionsschutzbeschichtung aufweisen.

Die Erfindung kennzeichnet sich durch eine Korrosionsschutzbeschichtung gemäß dem kennzeichnenden Teil des Anspruchs 1.
Ein solches Feuerlöschsystem wird in US 2009 / 0 194 187 offenbart.
Nach erfindungswesentlicher Erkenntnis der Erfinder ist einzig und allein eine innenliegende Korrosionsschutzbeschichtung für die zumindest teilweise als Flussstahl-Metallrohr ausgebildeten Durchleitungsmittel (3) geeignet, für die Konstante C einen Wert in einem Bereich von 125 bis 150 bei Inbetriebnahme des Feuerlöschsystems und - bevorzugt - genauso noch innerhalb eines Nutzungszeitraums von einem Jahr und ganz besonders bevorzugt auch noch innerhalb eines Nutzungszeitraums von fünf Jahren nach Inbetriebnahme des Feuerlöschsystems zu gewährleisten. Durch die Gewährleistung eines Wertes für C in dem die Erfindung kennzeichnenden Bereich und noch weitergehend in den bevorzugten Bereichen der hier vorgestellten Erfindung wird auf Basis der derart ausgebildeten innenliegenden Korrosionsschutzbeschichtung eine komplett ebene und nicht poröse Versiegelung der Innenseiten der Metallrohre (3) ausgebildet, die seitens des durch die Metallrohre (3) geführten Löschmediums selbst über viele Jahre nicht mehr unterwandert wird, was selbst für die in den Kupplungen zusammengeführten Rohrenden der Metallrohre (3) gilt.
Ganz besonders bevorzugt ist die innenliegende Korrosionsschutzbeschichtung für die zumindest teilweise als Flussstahl-Metallrohr ausgebildeten Durchleitungsmittel (3) geeignet, für die Konstante C einen Wert in einem Bereich von 135 bis 150 bei Inbetriebnahme des Feuerlöschsystems und - bevorzugt - genauso noch innerhalb eines Nutzungszeitraums von einem Jahr und ganz besonders bevorzugt auch noch innerhalb eines Nutzungszeitraums von fünf Jahren nach Inbetriebnahme des Feuerlöschsystems zu gewährleisten.

Grundsätzlich sind auch Rohre aus Schleuderbeton, Zementverkleidetem Gusseisen, Edelstahl, Kupfer und verstärkte Glasfaser zumindest in eingeschränktem Umfang geeignet, für die Konstante C einen Wert in den beanspruchten Bereichen zu gewährleisten, sie scheiden jedoch aus unterschiedlichen Gründen in ihrer flächendeckenden Anwendung gänzlich aus:

- Rohre aus Schleuderbeton oder aus Zementverkleidetem Gusseisen weisen eine viel zu dicke Wandung und damit verbunden ein viel zu hohes Gewicht auf, so dass ihre flächendeckende im Sinne von übliche Anwendung in Gebäuden allein schon deshalb unmöglich ist. Rohre aus Schleuderbeton oder aus Zementverkleidetem Gusseisen kommen aus besagten Gewichtsgründen und aufgrund ihres zu geringen Biegeindexes als Durchleitungsmittel (3) zur Verbindung der Mittel (1) zur Bereitstellung des Löschmediums mit dem mindestens einen Mittel (2) zur Applikation des Löschmediums ausschließlich im Erdreich in Betracht.
- Rohre aus Edelstahl, Kupfer und verstärkter Glasfaser sind zwar grundsätzlich möglich, weisen aber einen viel zu hohen Preis auf, der am Markt nicht durchsetzbar ist. Zudem sind Rohre aus verstärkter Glasfaser und allgemein aus Kunststoff brennbar bzw. bei hohen Temperaturen schmelzend, was ihren Einsatz einschränkt auf Bereiche mit geringer Brandlast und/oder auf eine Verlegung innerhalb angegossener Betondecken. Als Lösung der zugrundeliegenden Aufgabe sind alle drei grundsätzlich möglichen Rohrarten ungeeignet.

Die Erfindung ist hinsichtlich der Nenngröße für die Durchleitungsmittel (3) zur Verbindung der Mittel (1) zur Bereitstellung des Löschmediums mit dem mindestens einen Mittel (2) zur Applikation des Löschmediums praktisch nicht eingeschränkt, insbesondere und bevorzugt sollen die Flussstahl-Metallrohre zur Ausbildung der Durchleitungsmittel (3) eine Nennweite in einem Bereich von DN 32 bis DN 250 aufweisen, was den gängigen Rohrnennweiten von der Hauptleitung [(3), a], beispielsweise ausgebildet als Steigleitungen, des diesseits vorgeschlagenen Feuerlöschsystems über mögliche Nebenverteilrohre [(3), b], beispielsweise ausgebildet als Verteilerleitungen, bis hin zu den Sprinkleranschlussrohren [(3), c], beispielsweise ausgebildet als Stränge (Strangleitungen), entspricht. In einer ganz besonders bevorzugten Ausführung sollen die Flussstahl-Metallrohre zur Ausbildung der Durchleitungsmittel (3) eine Nennweite in einem Bereich von DN 32 bis DN 65 aufweisen, was den Rohrnennweiten üblicher Nebenverteilrohre bis hin zu den Sprinkleranschlussrohren entspricht.

Ohne diesbezüglich beschränkt zu sein im Sinne der vorliegenden Erfindung, gelten die folgende Beispiele für die Mittel (2) zur Applikation des Löschmediums als besonders bevorzugt::

- Sprinkler, insbesondere in den vielen zum Stand der Technik zählenden Ausführungsformen,

- Düsen,

- einfache Rohröffnungen

und vergleichbare Komponenten und Vorrichtungen zum Austragen und Verteilen des Löschmediums.

Das diesseits vorgeschlagene Feuerlöschsystem ist bestimmt zum Einsatz von Löschmedien, wobei das Medium bevorzugt ausgesucht ist aus der Liste, umfassend: Wasser, Schaum, Wasser-Schaum-Gemisch, Gas, und chemische Löschmittel.

Für das Löschmedium Gas bieten sich insbesondere $CO_2$ und das Edelgas Argon an, für die chemischen Löschmittel insbesondere solche, wie sie zum Zeitpunkt der Einreichung dieser Schrift bekannt sind unter

- dem Handelsnamen FM-200® der Firma DuPont in Genf, Schweiz,
- dem Handelsnamen Novec™ 1230 der Firma 3M in Neuss, Deutschland.

Als Schaum gelten insbesondere

- Wasserfilmbildendes Schaummittel,
  beispielsweise "Extensid AFFF 1%-3%" der "Fabrik chemischer Präparate Richard Sthamer GmbH & Co. KG" in Hamburg, Deutschland, und auch "Fomtec AFFF" der "Rosenbauer International AG" in Leonding, Österreich,
- Alkoholbeständiges Schaummittel,
  beispielsweise "Extensid AFS LV 1%-3%" der "Fabrik chemischer Präparate Richard Sthamer GmbH & Co. KG" in Hamburg, Deutschland, und auch "Fomtec ARC" der "Rosenbauer International AG" in Leonding, Österreich,

- Proteinschaummittel
  beispielsweise "Promax Spezial" der "Minimax GmbH & Co. KG" in Bad Oldesloe, Deutschland,

als bevorzugt, bei den Wasser-Schaum-Gemischen kommen diese Schaumarten in Verbindung mit Wasser zum Einsatz, wobei ein auf Volumen-% bezogenes Verhältnis

Wasser: Schaum
in einem Bereich von 100 : 1 bis 100: 3

als besonders bevorzugt gilt.

Dem Löschmedium, ausgesucht aus der Liste, umfassend: Wasser und Wasser-Schaum-Gemisch, kann ein geeignetes Frostschutzmittel beigegeben sein, um ein Platzen und/oder Beschädigen

- der Mittel (2) zur Applikation des Löschmediums und insbesondere
- der Durchleitungsmittel (3) zur Verbindung der Mittel (1) zur Bereitstellung des Löschmediums mit dem mindestens einen Mittel (2) zur Applikation des Löschmediums

bei niedrigen Einsatztemperaturen, bevorzugt in einem Temperaturbereich von 0 bis -25°C, ganz besonders bevorzugt in einem Temperaturbereich von 0 bis -28°C, zu vermeiden. Als Frostschutzmittel gelten insbesondere

- Frostschutzmittel auf glykolischer Basis,
- Frostschutzmittel auf Polypropylenglykol Basis und
- Frostschutzmittel auf Calcium Chloridbasis

als bevorzugt.

Sofern als Löschmedium Wasser oder ein Wasser-Schaum-Gemisch zum Einsatz kommen, bietet sich zur Bereitstellung dieses Löschmediums bevorzugt eine einfache Wasserversorgung sowie bei Anforderungen höherer Zuverlässigkeit sogar eine doppelte Wasserversorgung an. Ersetzt oder ganz besonders bevorzugt ergänzt werden können die einfache bzw. doppelte Wasserversorgung durch mindestens eine Bevorratungskomponente für das Löschmedium, wobei die mindestens eine Bevorratungskomponente ausgesucht ist aus der Liste, umfassend: offenes Reservoir, Hochbehälter, Zwischen- und Vorratsbehälter. Dabei weist bevorzugt die mindestens eine Bevorratungskomponente, ausgesucht aus der Liste, umfassend: Hochbehälter und Zwischen- und Vorratsbehälter, eine innenliegende Korrosionsschutzbeschichtung ganz besonders bevorzugt aus Beton und/oder Kunststoff auf.

Das diesseits vorgeschlagene Feuerlöschsystem zur Verteilung eines Löschmediums in allen hier offenbarten Ausführungsformen und -varianten kann sowohl ausgeführt sein als Nasssprinkleranlage, bei der die Durchleitungsmittel (3) dauerhaft mit einem bzw. mit dem Löschmedium gefüllt sind, oder auch genauso als Trockensprinkleranlage, bei der die Durchleitungsmittel (3) gewöhnlich mit einem Gas gefüllt sind und das Löschmedium nur im Einsatzfall durchgeleitet wird. Beide obigen Ausführungsformen des hier vorgeschlagenen Feuerlöschsystems gelten als bevorzugt im Sinne der vorliegenden Erfindung.

Grundsätzlich sind viele verschiedene Beschichtungen für die Durchleitungsmittel (3) denkbar wie beispielsweise anodisches und auch kathodisches Tauchlackieren sowie Parkerisieren, mit denen das erfindungswesentliche Merkmal "zur Gewährleistung eines Wertes für C in einem Bereich von 125 bis 150 bei Inbetriebnahme des Feuerlöschsystems" erfüllt werden kann. Nach vielen intensiven Überlegungen und mit diesen Überlegungen verbundenen Versuchen stellt die Erfindung ein neues Feuerlöschsystem dar, wenn die innenliegende Korrosionsschutzbeschichtung der zumindest teilweise als Flussstahl-Metallrohr ausgebildeten Durchleitungsmittel (3) mittels des Aquence™-Verfahrens, insbesondere mittels des Aquence™-Verfahrens der 900-Serie, ausgebildet ist.

Das von der Firma Henkel in Düsseldorf, Deutschland, entwickelte Aquence™-Verfahren bildet eine Beschichtung hier an der Innenseite der als Metallrohre ausgebildeten Durchleitungsmittel (3) auf chemischer Basis aus, bei der in grundsätzlicher Art und Weise und mit Blick auf die diesseits vorgestellte Erfindung in Form einer Lösung zugeführtes $FeF_3$-Eisenflorid für eine Freisetzung von $Fe^{2+}$-Ionen an der innenseitigen Oberfläche der Metallrohre sorgt, welche sich mit ebenso in Form der obigen Lösung zugeführten Lackpartikeln verbinden und sich sodann wieder an die innenseitige Oberfläche der Metallrohre anlagern. Im Laufe eines längeren Anlagerungsprozesses über einen Zeitraum in bevorzugter Länge von 4 bis 8 Minuten, ganz besonders bevorzugt über einen Zeitraum in einer Länge von 5 bis 7 Minuten, baut sich auf diese Weise eine Beschichtung mit einer Schichtdicke in einem bevorzugten Bereich von 15 bis 28 $\mu$m, ganz besonders bevorzugt in einem Bereich von 21 bis 27 $\mu$m, auf. Bei dem besonders bevorzugten Aquence™-Verfahren der 900-Serie wird auf die zuvor beschriebene Art und Weise eine Epoxyd/Acryl-basierte innenliegende Korrosionsschutzbeschichtung ausgebildet.

Die ganz besonders bevorzugt mittels kontinuierliche Durchströmung mit der Lösung insbesondere nach dem Aquence™-Verfahren der 900-Serie ausbildete Epoxyd/Acrylbasierte innenliegende Korrosionsschutzbeschichtung gewährleistet in einem besonders überzeugenden Maß die Gewährleistung eines Wertes für C in einem Bereich von 125 bis 150 bei Inbetriebnahme des Feuerlöschsystems und selbst in einem Bereich von 135 bis 150 innerhalb eines Nutzungszeitraums von 5 Jahren. Ein weiterer wesentlicher Vorteil einer derartig ausgebildeten Epoxyd/Acryl-basierten innenliegenden Korrosionsschutzbeschichtung ist deren Beständigkeit

- gegenüber den bevorzugten Löschmedien, ausgesucht aus der Liste, umfassend: Wasser, Schaum, Wasser-Schaum-Gemisch, Gas, und chemische Löschmittel,

- und gegenüber den Löschmittelzusätzen, wobei hier insbesondere die bevorzugten Frostschutzmittel gemeint sind.

In den zahlreichen, dieser Erfindung vorausgegangenen Versuchen wurde festgestellt, dass zum Aufbau einer ausreichend dicken Epoxyd/Acryl-basierten Aquence™-Beschichtung eine kontinuierliche Durchströmung der Flussstahl-Metallrohre (3) mit der Lösung nach dem Aquence™-Verfahren der 900-Serie in einer Durchströmungsgeschwindigkeit innerhalb eines Bereichs von 9 m/min bis 18 m/min und noch besser von 12 m/min bis 15 m/min über eine Zeit in bevorzugter Länge von 4 bis 8 Minuten, ganz besonders bevorzugt über einen Zeitraum in einer Länge von 5 bis 7 Minuten, zu gewährleisten ist, weshalb die genannten Bereiche für die Durchströmungsgeschwindigkeit allein und genauso in Kombination mit der Durchströmungszeit als bevorzugt gelten.

Aufgrund der Tatsache, dass die innenliegende Korrosionsschutzbeschichtung entsprechend aller hier vorgeschlagenen Ausführungsformen einen Wert für C mindestens in einem Bereich von 125 bis 150 gewährleistet, zeichnen sich die Innenseiten der Metallrohre (3) durch eine komplett ebene und nicht poröse Versiegelung aus, die seitens des durch die Metallrohre (3) geführten Löschmediums selbst über viele Jahre nicht mehr unterwandert werden kann, weshalb derartig ausgebildete Flussstahl-Metallrohre zur Ausbildung der Durchleitungsmittel (3) eine Wandstärke ganz besonders bevorzugt in einem Bereich von nur noch 2,0 mm bis 2,5 mm statt der heute noch üblichen 2,6 mm aufweisen können: zur Sicherstellung größtmöglicher Verfügbarkeitssicherheit sind dickere Wandungen für die Durchleitungsmittel (3) zur Verbindung der Mittel (1) zur Bereitstellung des Löschmediums mit dem mindestens einen Mittel (2) zur Applikation des Löschmediums nicht mehr nötig. Bei gleich bleibenden Außendurchmessern der Metallrohre (3) kann so der Innendurchmesser um 0,2 mm bis 1,2 mm vergrößert werden.

In Anwendung der diesseits vorgeschlagenen Erfindung in allen hier vorgeschlagenen Ausführungsformen kann die Durchflussrate Q durch die Rohrleitungen, ausgebildet als Flussstahl-Metallrohr mit einer die Erfindung kennzeichnenden innenliegenden Korrosionsschutzbeschichtung gesteigert werden um einen auf die Durchflussrate von verzinkten Rohren bezogenen Prozentsatz in einem Bereich von 4 % bis 34 %.

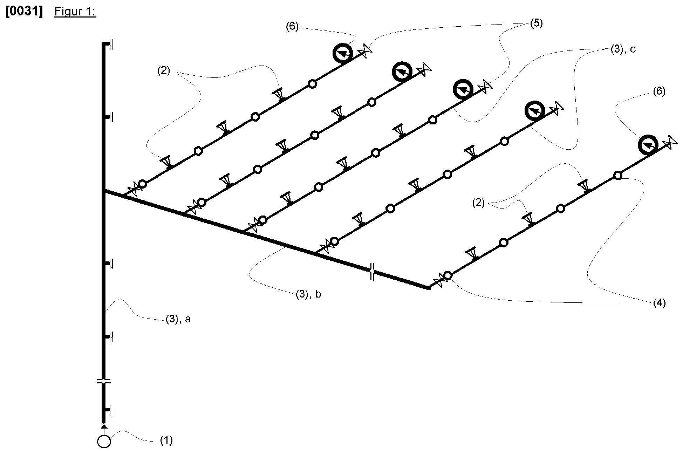

Die nachfolgende Figur 1 soll die Erfindung weitergehend erläutern.

Figur 1 zeigt den prinzipiellen Aufbau einer zu Versuchszwecken und zur Verifizierung der gemachten Erfindung realisierten Anlage, welche als Trockensprinkleranlage mit periodisch durchgeführten Sprinklereinsätzen ausgeführt ist.

An ein schematisch nur angedeutetes Mittel (1) zur Bereitstellung des Löschmediums, hier Wasser, in Form einer einfachen Wasserversorgung ist ein verzweigtes System von Durchleitungsmitteln (3) angeschlossen, wobei die Durchleitungsmittel (3)

- eine zentrale Steigleitung [(3), a]

- mehrere von der zentralen Steigleitung [(3), a] abzweigende Verteilerleitungen [(3), b]

- und pro Verteilerleitung [(3), b] jeweils mehrere Stränge bzw. Strangleitungen [(3), c] umfassen. Dabei sind in der Figur 1 zu deren Vereinfachung nur eine Verteilerleitung [(3), b] und zu dieser Verteilerleitung [(3), b] nur wenige Stränge [(3), c] vollständig dargestellt.

Jeder Strang [(3), c] weist

- an seinem zur Verteilerleitung [(3), b] gerichteten Anfang und an seinem Ende jeweils einen Kugelhahn (5),

- vor dem Kugelhahn (5) am Ende des Strangs [(3), c] ein Manometer (6),

- jeweils drei Sprinkler als Mittel (2) zur Applikation des Löschmediums

- und eine Vielzahl an Kupplungsverbindungen (4) zum möglichen individuellen Austausch eines jeden Sprinklers (2)

auf.

Insgesamt sind in der Versuchsanlage so von insgesamt 60 Strängen [(3), c] mit einer jeweiligen Nennweite DN 32 und einer jeweiligen Wandstärke von 2,6 mm fünf Stränge [(3), c] aus Flussstahl-Metallrohren mit Epoxyd/Acryl-basierter innenliegender Korrosionsschutzbeschichtung verbaut. Dabei weist diese innenliegende Korrosionsschutzbeschichtung in allen dieser fünf Stränge [(3), c] eine Dicke in einem Bereich von 15 bis 27 μm auf, in den Strängen [(3), c] der besonders bevorzugten Variante eine Dicke in einem enger gefassten Bereich von 21 bis 27 μm. Die Epoxyd/Acryl-basierte innenliegende Korrosionsschutzbeschichtung ist in allen dieser fünf Stränge [(3), c] ausgebildet mit Hilfe des Aquence™-Verfahrens der 900-Serie. Weitere 49 Stränge [(3), c] der Versuchsanlage sind mit verzinkten Flussstahl-Metallrohren aufgebaut, die restlichen sechs Stränge [(3), c] weisen Flussstahl-Metallrohre ohne jegliche Innenbeschichtung auf.

Nach 12 Monaten Versuchszeit mit ständig wechselnden Betriebszuständen und starken Außenklimaschwankungen von feucht-warm über trocken-heiß bis trocken-kalt und nass-kalt zeigen die Stränge [(3), c] aus Flussstahl-Metallrohren mit Epoxyd/Acryl-basierter innenliegender Korrosionsschutzbeschichtung kaum Korrosion an den jeweiligen Strangenden, während Flächenkorrosion überhaupt nicht feststellbar ist. Auch sind alle Gewinde an den jeweiligen Kupplungsverbindungen (4) nach Ende der Versuchszeit noch vollständig versiegelt und zeigen grundsätzlich keine Korrosionsansätze. Dagegen zeigen sowohl die verzinkten Flussstahl-Metallrohre wie auch die Flussstahl-Metallrohre ohne jegliche Innenbeschichtung an den Strangenden und zu den Kupplungsverbindungen (4) hin deutlichen, im Rohrinneren einen wenn auch geringen aber deutlich erkennbaren Rostansatz, was zu einer deutlichen Reduzierung der C-Werte führt. Einzig die Flussstahl-Metallrohren mit Epoxyd/Acryl-basierter innenliegender Korrosionsschutzbeschichtung wiesen am Ende der 12-monatigen Versuchszeit einen Wert für C von 140 auf, was exakt dem Wert zu Beginn des Langzeitversuchs entspricht.

Somit zeigen die Erkenntnisse aus dem Betrieb der Versuchsanlage einerseits die großen Vorteile eines erfindungsgemäßen Feuerlöschsystems gegenüber bisherigen Feuerlöschsystemen, sie zeigen andererseits auch, dass mit Hilfe des erfindungsgemäßen Feuerlöschsystems die der Erfindung zugrundeliegenden Aufgaben einer monetären Verbesserung in der *Auslegung* und im *Betrieb* von Sprinkleranlagen nachhaltig gelöst werden konnten.

Begriffsliste:

(1)    Mittel zur Bereitstellung des Löschmediums
(2)    Mittel zur Applikation des Löschmediums
(3)    Durchleitungsmittel
       (3), a - Steigleitung
       (3), b - Verteilerleitung
       (3), c - Strang(leitung)
(4)    Kupplungsverbindung
(5)    Kugelhahn
(6)    Manometer

**Patentansprüche**

1.    Feuerlöschsystem zur Verteilung eines Löschmediums, mindestens aufweisend:

    - Mittel (1) zur Bereitstellung des Löschmediums,
    - mindestens ein Mittel (2) zur Applikation des Löschmediums,
    - Durchleitungsmittel (3) zur Verbindung der Mittel (1) zur Bereitstellung des Löschmediums mit dem mindestens einen Mittel (2) zur Applikation des Löschmediums,

    wobei die Durchleitungsmittel (3) zumindest teilweise als Flussstahl-Metallrohr ausgebildet sind,
    wobei der Rohrreibungsverlust in Rohren definiert ist gemäß der Hazen-Williams-Formel (1), mit

$$P = 6{,}05 \cdot 10^{5} \cdot L \cdot Q^{1{,}85} \cdot C^{(-1{,}85)} \cdot d^{(-4{,}87)}, \text{ worin:}$$

    P = Druckverlust in der Rohrleitung, in bar,
    Q = Durchflussrate durch die Rohrleitung, in l/min,

d = mittlere Innendurchmesser des Rohres, in mm,

C = Konstante für Art und Zustand der Rohrleitung,

L = Äquivalentlänge von Rohr- und Formstücken, in m,

wobei die zumindest teilweise als Flussstahl-Metallrohr ausgebildeten Durchleitungsmittel (3) eine mindestens innenliegende Korrosionsschutzbeschichtung aufweisen, und die innenliegende Korrosionsschutzbeschichtung ausgebildet ist zur Gewährleistung eines Wertes für C in einem Bereich von 125 bis 150 bei Inbetriebnahme des Feuerlöschsystems,

**dadurch gekennzeichnet, dass** die innenliegende Beschichtung aus in Lösung zugeführten Lackpartikeln gebildet ist, welche mittels in Lösung zugeführten $FeF_3$-Eisenfluorids unter Freisetzung von $Fe^{2+}$-Ionen an einer innenseitigen Oberfläche der Metallrohre angelagert sind.

2. Feuerlöschsystem nach Patentanspruch 1, **dadurch gekennzeichnet, dass** die innenliegende Korrosionsschutzbeschichtung ausgebildet ist zur Gewährleistung eines Wertes für C in einem Bereich von 125 bis 150 innerhalb eines Nutzungszeitraums von 5 Jahren.

3. Feuerlöschsystem nach einem der Patentansprüche 1 und 2,
**dadurch gekennzeichnet, dass** die innenliegende Korrosionsschutzbeschichtung ausgebildet ist zur Gewährleistung eines Wertes für C in einem Bereich von 135 bis 150 bei Inbetriebnahme des Feuerlöschsystems.

4. Feuerlöschsystem nach einem der Patentansprüche 1 bis 3,
**dadurch gekennzeichnet, dass** die innenliegende Korrosionsschutzbeschichtung ausgebildet ist zur Gewährleistung eines Wertes für C in einem Bereich von 135 bis 150 innerhalb eines Nutzungszeitraums von 5 Jahren.

5. Feuerlöschsystem nach einem der Patentansprüche 1 bis 4,
**dadurch gekennzeichnet, dass** das Flussstahl-Metallrohr zur Ausbildung der Durchleitungsmittel (3) eine Nennweite in einem Bereich von DN 32 bis DN 250 aufweist.

6. Feuerlöschsystem nach Patentanspruch 5,
**dadurch gekennzeichnet, dass** das Flussstahl-Metallrohr zur Ausbildung der Durchleitungsmittel (3) eine Nennweite in einem Bereich von DN 32 bis DN 65 aufweist.

7. Feuerlöschsystem nach einem der Patentansprüche 5 und 6,
**dadurch gekennzeichnet, dass** das Flussstahl-Metallrohr zur Ausbildung der Durchleitungsmittel (3) eine Wandstärke in einem Bereich von 2,0 mm bis 2,5 mm aufweist.

8. Feuerlöschsystem nach einem der Patentansprüche 1 bis 7,
dadurch gekenntzeichnet, dass das Löschmedium ein Medium ist, ausgesucht aus der Liste, umfassend: Wasser, Schaum, Wasser-Schaum-Gemisch, Gas, chemische Löschmittel.

9. Feuerlöschsystem nach einem der Patentansprüche 1 bis 8,
**dadurch gekennzeichnet, dass** die Mittel (1) zur Bereitstellung des Löschmediums mindestens eine Bevorratungskomponente für das Löschmedium umfassen, wobei die mindestens eine Bevorratungskomponente ausgesucht ist aus der Liste, umfassend: offenes Reservoir, Hochbehälter, Zwischen- und Vorratsbehälter.

10. Feuerlöschsystem nach Patentanspruch 9,
**dadurch gekennzeichnet, dass** die mindestens eine Bevorratungskomponente, ausgesucht aus der Liste, umfassend: Hochbehälter und Zwischen- und Vorratsbehälter, eine innenliegende Korrosionsschutzbeschichtung aus Beton und/oder Kunststoff aufweist.

11. Feuerlöschsystem nach einem der Patentansprüche 1 bis 10,
**dadurch gekennzeichnet, dass** das Wasser zur Bereitstellung der Löschmedien, ausgesucht aus der Liste, umfassend:

Wasser und Wasser-Schaum-Gemisch, aus einer einfachen Wasserversorgung ist.

12. Feuerlöschsystem nach einem der Patentansprüche 1 bis 7,
**dadurch gekennzeichnet, dass** das Wasser zur Bereitstellung der Löschmedien, ausgesucht aus der Liste, umfassend:

Wasser und Wasser-Schaum-Gemisch, aus einer doppelten Wasserversorgung ist.

**13.** Feuerlöschsystem nach einem der Patentansprüche 1 bis 12,
**dadurch gekennzeichnet, dass** dem Löschmedium, ausgesucht aus der Liste, umfassend: Wasser und Wasser-Schaum-Gemisch, Frostschutzmittel beigegeben ist.

## Claims

**1.** Fire extinguishing system for distributing an extinguishing medium, at least having:

- means (1) for providing the extinguishing medium,
- at least one means (2) for applying the extinguishing medium,
- transmission means (3) for connecting the means (1) for providing the extinguishing medium to the at least one means (2) for applying the extinguishing medium,

wherein the transmission means (3) are constructed at least partially as a mild steel metal pipe,
wherein the pipe friction loss in pipes is defined in accordance with the Hazen-Williams formula (1), with

$$P = 6.05 \cdot 10^5 \cdot L \cdot Q^{1.85} \cdot C^{(-1.85)} \cdot d^{(-4.87)}, \text{ where:}$$

where:

P = Pressure loss in the pipeline, in bar,
Q = Flow rate through the pipeline, in 1/min,
d = Mean inner diameter of the pipe, in mm,
C = Constant for type and state of the pipeline,
L = Equivalent length of pipe and shaped pieces, in m,

wherein the transmission means (3) which are constructed at least partially as a mild steel metal pipe have an at least internal corrosion-resistant coating and the internal corrosion-resistant coating is constructed to ensure a value for C in a range from 125 to 150 when the fire extinguishing system is initiated, **characterised in that** the internal coating is formed from paint particles which are supplied in solution and which, by means of $FeF_3$ iron fluoride supplied in solution, are deposited on an internal surface of the metal pipes with $Fe^{2+}$ ions being released.

**2.** Fire extinguishing system according to patent claim 1, **characterised in that** the internal corrosion-resistant coating is constructed to ensure a value for C in a range from 125 to 150 within a period of use of 5 years.

**3.** Fire extinguishing system according to either patent claim 1 or patent claim 2,
**characterised in that** the internal corrosion-resistant coating is constructed to ensure a value for C in a range from 135 to 150 when the fire extinguishing system is initiated.

**4.** Fire extinguishing system according to any one of patent claims 1 to 3,
**characterised in that** the internal corrosion-resistant coating is constructed to ensure a value for C in a range from 135 to 150 within a period of use of 5 years.

**5.** Fire extinguishing system according to any one of patent claims 1 to 4,
**characterised in that** the mild steel metal pipe for forming the transmission means (3) has a nominal width in a range from DN 32 to DN 250.

**6.** Fire extinguishing system according to patent claim 5, **characterised in that** the mild steel metal pipe for forming the transmission means (3) has a nominal width in a range from DN 32 to DN 65.

**7.** Fire extinguishing system according to either patent claim 5 or patent claim 6,

**characterised in that** the mild steel metal pipe for forming the transmission means (3) has a wall thickness in a range from 2.0 mm to 2.5 mm.

8. Fire extinguishing system according to any one of patent claims 1 to 7,
   **characterised in that** the extinguishing medium is a medium selected from the list comprising: water, foam, water/foam admixture, gas, chemical extinguishing medium.

9. Fire extinguishing system according to any one of patent claims 1 to 8,
   **characterised in that** the means (1) for providing the extinguishing medium comprise at least one storage component for the extinguishing medium, wherein the at least one storage component is selected from the list comprising: open reservoir, elevated tank, intermediate and storage tank.

10. Fire extinguishing system according to patent claim 9, **characterised in that** the at least one storage component selected from the list comprising: elevated tank and intermediate and storage tank, has an internal corrosion-resistant coating of concrete and/or plastics material.

11. Fire extinguishing system according to any one of patent claims 1 to 10,
    **characterised in that** the water for providing the extinguishing media selected from the list comprising:

    water and water/foam admixture, is from a single water supply.

12. Fire extinguishing system according to any one of patent claims 1 to 7,
    **characterised in that** the water for providing the extinguishing media selected from the list comprising:

    water and water/foam admixture, is from a dual water supply.

13. Fire extinguishing system according to any one of patent claims 1 to 12,
    **characterised in that** antifreeze is added to the extinguishing medium selected from the list comprising:

    water and water/foam admixture.


**Revendications**

1. Système anti-incendie pour distribuer un agent d'extinction présentant au moins :

   - des moyens (1) pour fournir l'agent d'extinction,
   - au moins un moyen (2) pour appliquer l'agent d'extinction,
   - des moyens de transfert (3) pour relier les moyens

       (1) pour fournir l'agent d'extinction au au moins un moyen
       (2) pour appliquer l'agent d'extinction,

   dans lequel les moyens de transfert (3) sont réalisés au moins en partie en tant que tube métallique en acier doux,
   dans lequel la perte de résistance dans les tubes est définie selon la formule de Hazen-Williams (1) comme suit :

$$P = 6{,}05.10^{5}.L.Q^{1,85}.C^{(-1,85)}.d^{(-4,87)}, \text{ dans laquelle :}$$

   P = perte de pression dans la conduite, en bar,
   Q = débit d'écoulement à travers la conduite, en 1/min,
   d = diamètre interne moyen du tube, en mm,
   C = constante pour le type et l'état de la conduite,
   L = longueur équivalente des tubes et des raccords, en m,

   dans lequel les moyens de transfert (3), réalisés au moins en partie en tant que tube métallique en acier doux, présentent un revêtement de protection contre la corrosion au moins intérieur et le revêtement de protection contre la corrosion intérieur est réalisé pour garantir une valeur pour C dans une plage de 125 à 150 lors de la mise en service du système anti-incendie,

**caractérisé en ce que** le revêtement intérieur est formé de particules de laque mises en solution, qui sont fixées sur une surface interne du tube métallique au moyen de fluorure de fer $FeF_3$ mis en solution en libérant des ions $Fe^{2+}$.

2. Système anti-incendie selon la revendication 1, **caractérisé en ce que** le revêtement de protection contre la corrosion intérieur est réalisé pour garantir une valeur pour C dans une plage de 125 à 150 dans un intervalle de temps d'utilisation de 5 ans.

3. Système anti-incendie selon l'une quelconque des revendications 1 et 2,
**caractérisé en ce que** le revêtement de protection contre la corrosion intérieur est réalisé pour garantir une valeur pour C dans une plage de 135 à 150 lors de la mise en service du système anti-incendie.

4. Système anti-incendie selon l'une quelconque des revendications 1 à 3,
**caractérisé en ce que** le revêtement de protection contre la corrosion intérieur est réalisé pour garantir une valeur pour C dans une plage de 135 à 150 dans un intervalle de temps d'utilisation de 5 ans.

5. Système anti-incendie selon l'une quelconque des revendications 1 à 4,
**caractérisé en ce que** le tube métallique en acier doux pour réaliser les moyens de transfert (3) présente un diamètre nominal dans une plage de DN 32 à DN 250.

6. Système anti-incendie selon la revendication 5,
**caractérisé en ce que** le tube métallique en acier doux pour réaliser les moyens de transfert (3) présente un diamètre nominal dans une plage de DN 32 à DN 65.

7. Système anti-incendie selon l'une quelconque des revendications 5 et 6,
**caractérisé en ce que** le tube métallique en acier doux pour réaliser les moyens de transfert (3) présente une épaisseur de paroi dans une plage de 2,0 mm à 2,5 mm.

8. Système anti-incendie selon l'une quelconque des revendications 1 à 7,
**caractérisé en ce que** l'agent d'extinction est un agent choisi dans la liste comprenant : de l'eau, de la mousse, un mélange d'eau et de mousse, du gaz, un agent d'extinction chimique.

9. Système anti-incendie selon l'une quelconque des revendications 1 à 8,
**caractérisé en ce que** les moyens (1) pour fournir l'agent d'extinction comprennent au moins un composant d'approvisionnement pour l'agent d'extinction, dans lequel le au moins un composant d'approvisionnement est choisi dans la liste comprenant : un réservoir ouvert, un réservoir surélevé, un réservoir intermédiaire et de stockage.

10. Système anti-incendie selon la revendication 9,
**caractérisé en ce que** le au moins un composant d'approvisionnement est choisi dans la liste comprenant : un réservoir surélevé et un réservoir intermédiaire et de stockage, un revêtement de protection contre la corrosion intérieur en béton et/ou en matière plastique.

11. Système anti-incendie selon l'une quelconque des revendications 1 à 10,
**caractérisé en ce que** l'eau pour fournir les agents d'extinction est choisie dans la liste comprenant :

de l'eau et un mélange d'eau et de mousse provenant d'une alimentation en eau simple.

12. Système anti-incendie selon l'une quelconque des revendications 1 à 7,
**caractérisé en ce que** l'eau pour fournir les agents d'extinction est choisie dans la liste comprenant :

de l'eau et un mélange d'eau et de mousse provenant d'une alimentation en eau double.

13. Système anti-incendie selon l'une quelconque des revendications 1 à 12,
**caractérisé en ce que** l'agent d'extinction est choisi dans la liste comprenant : de l'eau et un mélange d'eau et de mousse auquel est ajouté un antigel.

**[0031]** Figur 1:

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

*   US 20090194187 A